# EUROPEAN PATENT APPLICATION

(11) **EP 3 981 935 A1**
(43) Date of publication of application: **13.04.2022**
(21) Application number: 21201488.0
(22) Date of filing: 07.10.2021
(51) Int. Cl.: E04H 17/00, A01K 3/00, B29C 33/00, E04H 17/08, E04H 17/12

(54) **FENCE POST**

(30) Priority: 07.10.2020 GB 202015892
(71) Applicant: Hotline-Horizont Limited, Newton Abbot Devon TQ12 2DA (GB)
(72) Inventor: WHITBREAD, Colin, Newton Abbot, TQ12 2DA (GB); LITTLE, Stewart, Newton Abbot, TQ12 6RY (GB)
(74) Representative: HGF

(57) **Abstract**

An electric fence post (1), a method and a mould for making the fence post (1). The fence post (1) includes a hollow body (2a, 2b, 2c), a plurality of receptacles (4, 4a) for receiving an electrical wire or tape and a spike (5) at one end of the hollow body (2a, 2b, 2c) for securing the post into a substrate. The receptacle (4, 4a) is described by a pair of circumferentially spaced apertures (40, 41, 40a, 41a) extending through a wall of the hollow body (2a, 2b, 2c) and a slot (42, 42a) joining the aperture pair (40, 41, 40a, 41a) through which a length of wire or tape may be inserted into the receptacle (4, 4a).

## Description

This invention relates generally to a fence post, and more particularly a fence post for an electric fence. More specifically, although not exclusively, this invention relates to an electric fence post, a post segment, a method of moulding an electric fence post or post segment and/or a mould therefor.

Electric fencing is commonly used to provide a safe and secure boundary for permanent or temporary applications. Agricultural electric fencing is used to keep livestock within a defined area or to keep predators out.

Electric fencing normally consists of a number of posts, each having a number of engaging elements, e.g. hooks, along their length for engagement or receipt of electrically conductive tape or wire. The tape or wire is connected to an electric fence energiser, which is in turn connected to a source of electrical power, e.g. mains electricity or battery.

Conventional electric fence posts are increasingly problematic for shipping and retail display. Further, current designs often require a multi-step manufacturing process and use potentially superfluous amounts of material, increasing weight and cost.

It is therefore a first non-exclusive object of the invention to provide an electric fence post, a post segment and a method of moulding an electric fence post or post segment that overcomes, or at least mitigates, the known problems of the prior art.

Accordingly, a first aspect of the invention provides a post, for example an electric fence post, the post comprising a hollow body, a receptacle for receiving an electrical wire or tape and a spike at one end of the hollow body for securing the post into a substrate, wherein the receptacle is described by a pair of circumferentially spaced apertures extending through a wall of the hollow body and a connecting portion joining the aperture pair through which a length of wire or tape may be inserted into the receptacle.

The connecting portion may comprise a slot.

The post may comprise a hole or rear hole, which may extend through the wall on an opposite side of the body to the receptacle or one of the apertures or the connecting portion or slot.

The receptacle may be one of a plurality of receptacles, e.g. spaced along the length of the hollow body. The hole or rear hole may be one of a plurality of holes or rear holes, e.g. extending through the wall on an opposite side of the body to a corresponding one of the receptacles, apertures, connecting portions or slots.

The electric fence post may comprise a plurality of post segments. Each post segment may comprise part of the hollow body, at least one of the receptacles and at least one of the holes or rear holes.

The post segments may be connected together by a connection means. The connection means may comprise a connector or a threaded, twist lock or snap fit connection. The connection means may be reversible or releasable.

At least one of the post segments may comprise a latch, for example a button latch. The latch may be at one end of the post segment. At least one of the post segments may comprise an aperture, e.g. for receipt of a latch or the latch of another post segment. The aperture may be at one end, e.g. the other end, of the post segment. At least one of the post segments may comprise the latch at one end and the aperture at the other end. At least one of the post segments may comprise a male thread, for example at one end, and/or a cooperating female thread, for example at the other end. At least one of the post segments may comprise a socket, for example at one end, and/or a plug, for example at the other end.

At least one of the post segments may comprise a spike, which may be at one of its ends. The post segment with a spike may comprise a connection means or further connection means, for example at the other end. The connection means at the other end may comprise part of the connector or threaded, twist lock or snap fit connector.

The slot or connecting portion may be narrower than at least one or each aperture of the aperture pair. The slot or connecting portion may be narrower in a direction along the length of the body than at least one or each aperture of the aperture pair. The or each slot or connecting portion may be skewed or may extend diagonally, for example between the or each aperture pair.

The hollow body may have a substantially circular, obround, disco rectangular or oval shaped cross-section.

The spike may comprise an encapsulated or partially encapsulated metal spike. The spike may comprise an over moulded spike or metal spike. The encapsulated or partially encapsulated spike may include one or more voids, e.g. through which a portion of the metal spike is visible. The one or more voids may be formed by respective support portions of the mould and/or a result of retaining the metal spike during moulding. The metal spike may be substantially cylindrical, and/or may have a circular, oval, polygonal, square or rectangular cross-section. In some cases, one end of the metal spike may narrow to a point. In other cases, the metal spike may have a substantially constant cross-section and/or have a blunt end. The metal spike may simply be in the form of a bar with flat ends.

The body may be formed of a polymeric or moulded plastics material. The post may comprise a cap, which may close the end of one of the post segments, e,g. an uppermost post segment. The cap may comprise a first, closed end. The cap may comprise a connection means, which may project from the first end and/or may form a second end of the cap.

According to an aspect of the invention there is provided a post segment, for example an electric fence post segment, the post segment comprising a hollow body, a receptacle for receiving an electrical wire or tape and a spike at one end of the hollow body for securing the post into a substrate, the receptacle comprising a pair of circumferentially spaced apertures extending through a wall of the hollow body and a slot joining the aperture pair.

The post or post segment may comprise a connector, for example at one of its ends. The connector may be at the other end of the post, post segment or hollow body to the spike. The connector may comprise a male or female connector.

According to an aspect of the invention there is provided a post segment, for example an electric fence post segment, the post segment comprising a hollow body and one or more receptacles spaced along its length for receiving an electrical wire or tape, the or each receptacle comprising a pair of circumferentially spaced apertures extending through a wall of the hollow body and a slot joining the aperture pair.

The post or post segment may comprise a connector, for example at one or each of its ends. The or at least one of the connectors may comprise a male or female connector. The post segment may have a male connector at one of its ends and a female connector at its other end.

The connector(s) may be for connection with another post segment, e.g. a respective further post segment. The or at least one or each connector may include a locator, e.g. for connecting the other post segment therewith at a predetermined orientation. The locator may be for orienting the other post segment, e.g. relative thereto.

The or at least one or each connector may comprise part of a connection means, for example the connection means described above. The or at least one or each connector may comprise part of a threaded, twist lock or snap fit connector, such as a button latch as described above.

Another aspect of the invention provides a method of moulding a post or post segment, e.g. an electric fence post or post segment, the method comprising: injecting a polymeric or molten plastics material into an elongated cavity of a mould within which an elongated core is received and in which the elongated core is at least partially supported by a support projecting into the elongated cavity; forming in the elongated cavity a hollow body incorporating a receptacle formed at least in part by the support, wherein the receptacle is described by a pair of circumferentially spaced apertures extending through a wall of the hollow body and a slot joining the aperture pair; withdrawing the elongated core from the cavity, e.g. to remove the fence post or post segment from the mould.

Due to the length of the elongated core, injection pressures during the moulding process may cause it to move or deform during the injection of material. Such movement or deformation may result in unacceptable variation in the wall thickness of the hollow body. This invention is particularly advantageous in that the supports projecting into the cavity reinforces and provides support to the elongated core, reducing the effect of movement or deformation during the moulding process.

The method may comprise separating a pair of mould blocks that together describe the elongated cavity, e.g. to remove the fence post or post segment from the mould.

The method may comprise forming, e.g. in the elongated cavity, a spike, prong or stake (hereinafter spike). The spike may be at one end of the hollow body. The spike may be for securing the post or post segment into a substrate.

The method may comprise inserting a metal spike within the mould, e.g. at one end of the elongated cavity, before injecting the molten plastic into the elongated cavity. This insertion may be carried out automatically, for example by a robot, robotic arm or any other suitable means.

The method may comprise retaining and/or supporting the metal spike within the elongated cavity. The metal spike may be retained and/or supported by or with one or more spike supports. The metal spike may be retained and/or supported as the molten plastics material is injected into the elongated cavity.

The method may comprise forming the or a spike, e.g. at one end of the hollow body, by surrounding and/or at least partially encapsulating the metal spike, for example with the molten plastics material. The method may comprise forming the spike by over moulding the metal spike.

The method may comprise separating the pair of mould blocks, for example before, during or after removing the post or post segment from the mould. The metal spike may comprise one or more voids. The one or more voids may be formed by the spike supports and/or as a result of retaining the metal spike during moulding.

The support that forms at least part of the receptacle may be one of two or more, e.g. a pair or plurality of, supports that form at least part of the receptacle. Each support of the pair may describe one of the circumferentially spaced apertures.

The hollow body may be formed incorporating a hole or rear hole, which may be formed at least in part by a further support, which may also project into the elongated cavity. The further support may also support the elongated core, for example the opposite side of the core to the support that forms at least part of the receptacle. The hole or rear hole may extend through the wall of the hollow body, for example on an opposite side of the body to the slot. The hole or rear hole may extend through the hollow body diametrically opposite the slot or receptacle. The further support may be referred to as an opposed support a pin support.

The provision of a further support is particularly useful if one end of the elongated core is unsupported, for example where the post or post segment includes a spike. The free end is otherwise unsupported, and may result in substantial core shift if adequate support is not provided.

The support may be one of a plurality of supports, e.g. spaced along the length of the elongated cavity. The hollow body may be formed incorporating a plurality of receptacles. Each of the plurality of receptacles may be formed at least in part by one of the plurality of spaced supports.

The method may comprise injecting a molten plastics material into a plurality of elongated cavities of a mould within each of which an elongated core is received. Each elongated core may be at least partially supported by a respective support.

The method may comprise forming in each elongated cavity a hollow body incorporating a receptacle formed at least in part by the support. The receptacle may be described by a pair of circumferentially spaced apertures extending through a wall of the hollow body. A slot may join the aperture pair.

The method may further comprise withdrawing each elongated core from each cavity, e.g. to remove the fence post or post segment. The method may comprise separating the pair of mould blocks, which together describe the elongated cavities, e.g. to remove the fence post or post segment from the mould.

The method may comprise closing a gate of at least one of the cavities, for example to prevent molten plastics material from entering the cavity. The method may comprise closing the gate of the at least one cavity whilst opening or leaving open a gate of at least one of the other cavities, for example such that molten plastics material is only injected into the cavities having open gates to form only some of the post segments.

The method may comprise forming at least one of the post segments with a connection means, e.g. a connection means as described above. The method may comprise forming at least one of the post segments with a connection means at an end thereof. The connection means may comprise a threaded, twist lock or snap fit connector. The connection means may be reversible or releasable.

The method may comprise forming at least one of the post segments with a latch, for example a button latch. The latch may be at or adjacent one end. The method may comprising forming at least one of the post segments with an aperture, e.g. for receipt of a latch at the other end. The method may comprise forming at least one of the post segments with a male thread, for example at one end, and/or a female thread, e.g. a cooperating female thread at the other end. The method may comprise forming at least one of the post segments with a socket, for example at one end, and/or a plug, for example at the other end.

The method may comprise forming at least one of the post segments with a spike at one end and the or a connection means at the other end.

Another aspect of the invention provides a method of manufacturing a post, e.g. an electric fence post, the method comprising moulding a plurality of post segments in the same mould, wherein each post segment comprises a connection means for connecting the post segments together to form a post.

According to another aspect of the invention there is provided a mould for manufacturing a hollow body of an electric fence post or post segment, the mould comprising an elongated cavity for describing an outer surface of the hollow body, an elongated core receivable within the elongated cavity for describing an inner surface of the hollow body and a support projecting into the elongated cavity which supports the elongated core and describes a receptacle of the hollow body when the mould is in a moulding configuration.

The elongated core may comprise a retractable, elongated core.

The elongated cavity and elongated core may be configured to form a hollow body therebetween. The support may be configured to form at least part of a receptacle in the hollow body. The receptacle may be described by a pair of circumferentially spaced apertures extending through a wall of the hollow body and a slot joining the aperture pair.

The mould may comprise a plurality of elongated cavities. Each cavity may describe an outer surface of a respective hollow body of an electric fence post or post segment. The mould may comprise a plurality of elongated cores, which may be retractable and/or may be for describing an inner surface of the hollow body. Each elongated core may be receivable within one of the elongated cavities.

The mould may comprise a plurality of supports. Each support may project into one of the elongated cavities, e.g. when the mould is in a moulding configuration. Each support may support a respective elongated core, e.g. when the mould is in a moulding configuration. Each support may describe at least part of a receptacle of the hollow body, e.g. when the mould is in a moulding configuration. Each receptacle may be described by a pair of circumferentially spaced apertures extending through a wall of the hollow body and a slot joining the aperture pair.

The mould may comprise one or more, e.g. two or more or a pair of, mould blocks. The mould blocks may be separable. The mould blocks may together describe the elongated cavity or cavities. One of the mould blocks may include the support(s). The other of the mould blocks may include one or more further supports. The further support(s) may project into the elongated cavity, e.g. for forming a hole. The further support(s) may be on an opposite side of the cavity to the support(s), e.g. to a respective support. The hole may be opposite the or each receptacle.

The mould cavity may describe a connection means, e.g. a connector, which may be at one end of the or at least one of the elongated cavities. Each of the mould blocks may describe part of a connector, which may be at one end of the or at least one of the elongated cavities.

The mould may comprise a gate, e.g. associated with at least one or each cavity. At least one of the gates may comprise a gating mechanism, such as a turn gate or a valve gate. The mould may be operable or controllable to close at least one gate, for example to prevent molten plastics material from entering the cavity with which it is associated. The mould may be operable or controllable to close the gate of at least one of the cavities, whilst opening or leaving open a gate of at least one of the other cavities, for example such that molten plastics material is only injected into the cavities having open gates to form only some of the post segments. The gate may be operable manually and/or automatically and/or remotely.

For the avoidance of doubt, any of the features described herein apply equally to any aspect of the invention. For example, the method may comprise any one or more features of the electric fence post or post segment relevant to the method and/or the electric fence post or post segment may comprise any one or more features or steps of the method relevant to the electric fence post or post segment.

Another aspect of the invention provides a computer program element comprising and/or describing and/or defining a three-dimensional design, e.g. of the post or post segment described above or an embodiment thereof. The three-dimensional design may be for use with a simulation means or an additive or subtractive manufacturing means, system or device.

The computer program element may be for causing, or operable or configured to cause, an additive or subtractive manufacturing means, system or device to manufacture the post or post segment described above or an embodiment thereof. The computer program element may comprise computer readable program code means for causing an additive or subtractive manufacturing means, system or device to execute a procedure to manufacture the post or post segment described above or an embodiment thereof.

A yet further aspect of the invention provides the computer program element embodied on a computer readable medium.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
Figure 1 is a perspective view of an electric fence post according to an embodiment of the invention;
Figure 2 is a perspective view of a front side of the ground engaging post segment of the post of Figure 1;
Figure 3 is a rear view of the post segment of Figure 2;
Figure 4 is a front view of one of the other post segments of the post of Figure 1;
Figure 5 is an enlarged perspective view of the female connection at one end of the all of the post segments; and
Figure 6 is an enlarged perspective view of the male connection at the other end of the post segments illustrated by Figure 4.

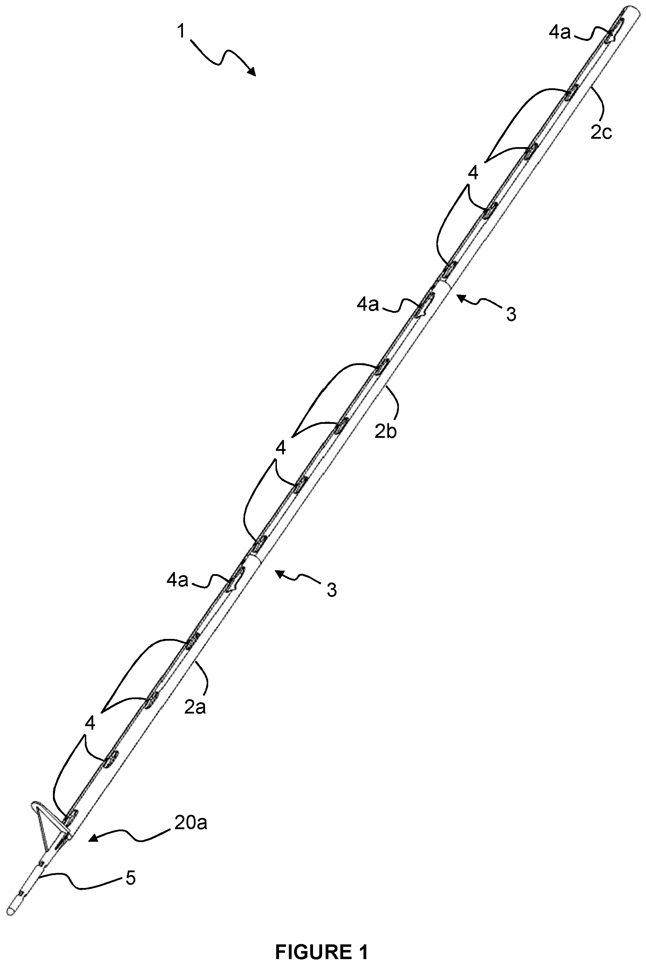

Referring now to Figure 1, there is shown an electric fence post 1 formed of three post segments 2a, 2b, 2c releasably connected together by button latch connectors 3. The post 1 is hollow with an obround cross section, and a series of receptacles 4, 4a spaced along its length for receiving a length of wire or tape (not shown) that is typically supplied with electric fences. The post 1 also has a spike 5 for securing the post 1 into a substrate, e.g. the ground.

Each of the post segments 2a, 2b, 2c is formed as a hollow tubular body having plurality of the receptacles 4, 4a described therein and is formed of a moulded plastics material in this example.

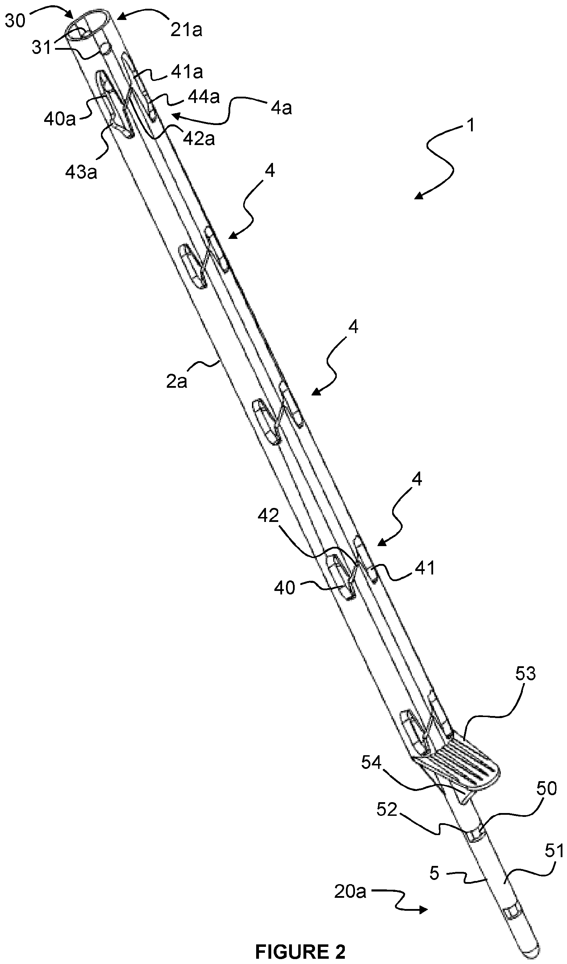

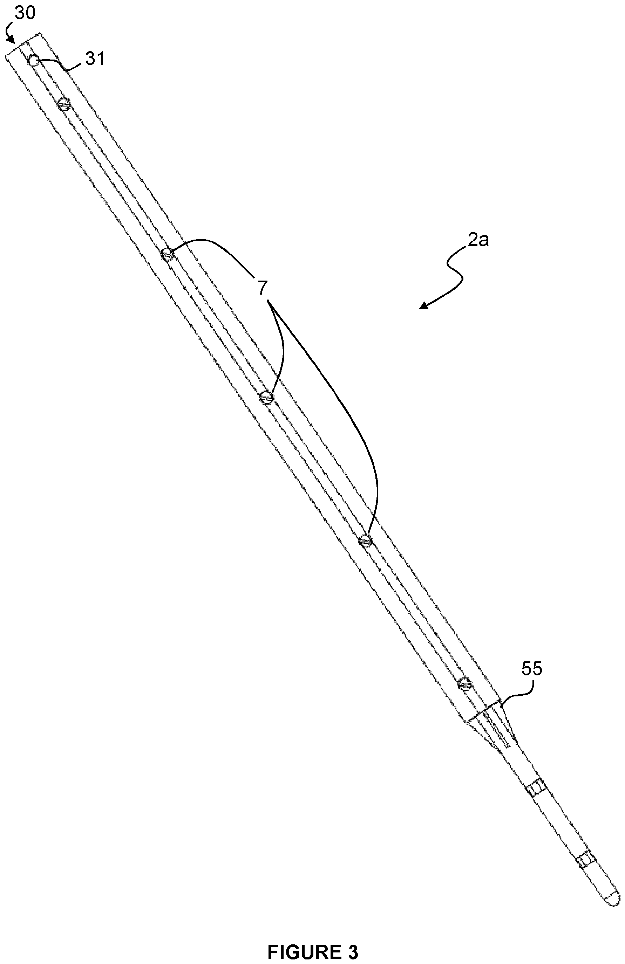

Referring now to Figures 2 and 3, a first, ground engaging post segment 2a in greater detail. This post segment 2a has a first, ground engaging end 20a and a second, connecting end 21a. Five receptacles 4, 4a are distributed evenly along the length of this post segment 2a. The receptacle 4a adjacent the second end 21a of the first post segment 2a is different to the other four receptacles 4.

Each of the four common receptacles 4 is described by a pair of circumferentially spaced apertures 40, 41 extending through a wall of the post segment 2a. The pair of spaced apertures 40, 41 are joined by a slot 42. The slot 42 extends diagonally between the apertures 40, 41 in this example. The slot 42 is narrower in a direction along the length of the post segment 2a than each of the pair of spaced apertures 40, 41. The skilled person will appreciate that the skewed and necked configuration of the slot enables the wire or tape to be manipulated into alignment with the slot for insertion into the receptacle 4, 4a, but inhibits inadvertent removal thereafter.

The receptacle 4a adjacent the second end 21a also includes a pair of circumferentially spaced apertures 40a, 41a and a skewed slot 42a joining the apertures 40a, 41a. However, each of the apertures 40a, 41a is longer than those of the other receptacles 4, and includes a notch 43a. These apertures 40a, 41a are configured to accept wider (e.g. 40mm) tapes and rope in set positions. The notches 43a locate the rope (not shown) into position and provide space for wider rope to be received within the receptacle 4a without impediment when installing.. The second end 21a also includes a female part 30 of one of the button latch connectors 3, which is in the form of a pair of opposed holes 31 at the front and rear of the first post segment 2a.

The spike 5 is formed by over-moulding a metal spike 50 with a plastic layer 51, thereby at least partially encapsulating the metal spike 50 to make it less dangerous for transportation. The metal spike 50 is visible through opposed pairs of voids 52, formed by supports (not shown) during manufacture of the post segment 2a. The skilled person will appreciate how these supports would function in an insert moulding process. For example, the support cores may be biased or spring loaded into contact with the metal spike 50. The use of biased supports facilitates the use of an inexpensive metal spike 50 having unpredictable dimensions. Alternatively, the metal spike 50 may be retained in position using a magnetic or electromagnetic retaining means.

Additionally or alternatively, the metal spike 50 may be at least partially held in position by a supporting pin. Where the post segment 2a is moulded in an upright position, the pin may support a lower end of the metal spike 50. In such cases, the post segment 2a may include a hole or a blind hole adjacent the free end of the spike 5, which may be created by the supporting pin.

A footplate 53 extends perpendicular to the segment 2a, at the upper end of the partially encapsulated spike 5. The footplate 53 is configured to enable a user to apply force with a foot when inserting the spike 5 of the post 1 into a substrate. A cantilever support web 54 extends between the spike 5 and footplate 53 to provide it with sufficient rigidity to withstand the force applied to it by a user's foot.

Extending between the hollow tubular body and the partially encapsulated spike 5 are a plurality of supporting webs 55 (shown more clearly in Figure 3). These supporting webs 55 are configured to provide lateral stability to the interface between the hollow tubular body and the partially encapsulated spike 5.

As shown in Figure 3 in particular, a plurality of rear holes 7 extend through the wall on an opposite side of the post segment 2a to the receptacles 4, 4a. In this example, each of the rear holes 7 is aligned with a respective receptacle 4, 4a along the length of the post segment 2a.

The post segment 2a is formed by an injection moulding process. The skilled person will appreciate that the mould (not shown) used to manufacture the post segment 2a will include an elongated cavity (not shown), describing an outer surface of the post segment 2a, and a retractable, elongated core (not shown) received within the cavity and describing an inner surface of the post segment 2a. The mould includes a pair of mould blocks (not shown), which together describe the elongated cavity and are separable to eject the post segment 2a after it has been moulded. One end of the elongated core (not shown) will be secured to the mould, whilst its other end will be spaced from a facing cavity surface, to create a void that will form the interface between the hollow body of the post segment 2a and the partially encapsulated spike 5.

Each of the receptacles 4, 4a and the rear holes 7 is formed by a respective support (not shown) projecting into the elongated cavity during manufacture of the post segment 2a.

More specifically, the supports that describe the receptacles 4, 4a project from one of the mould blocks, while those that describe the rear holes 7 project from the other mould block into the elongate cavity. The skilled person will appreciate that the supports will contact the elongated core and will mitigate the tendency for the core to move toward one side of the cavity, a phenomenon known in the art as 'core shift'.

Core shift results in variations in the wall thickness about a moulded hollow body, which is exacerbated when moulding tubular bodies having thin walls. The configuration of the receptacles 4, 4a and rear holes 7 therefore enables the tubular wall thickness of the post segment 2a to be reduced substantially, which reduces both cycle time and the amount of material required to manufacture the post segment 2a. Both of these factors contribute to a more cost effective post 1.

Moreover, conventional electric fence posts incorporate a hook that projects from the main body of the post, whereas the electric fence post 1 according to the invention includes receptacles that provide a similar function. This enables a further reduction in the material required to manufacture the post 1.

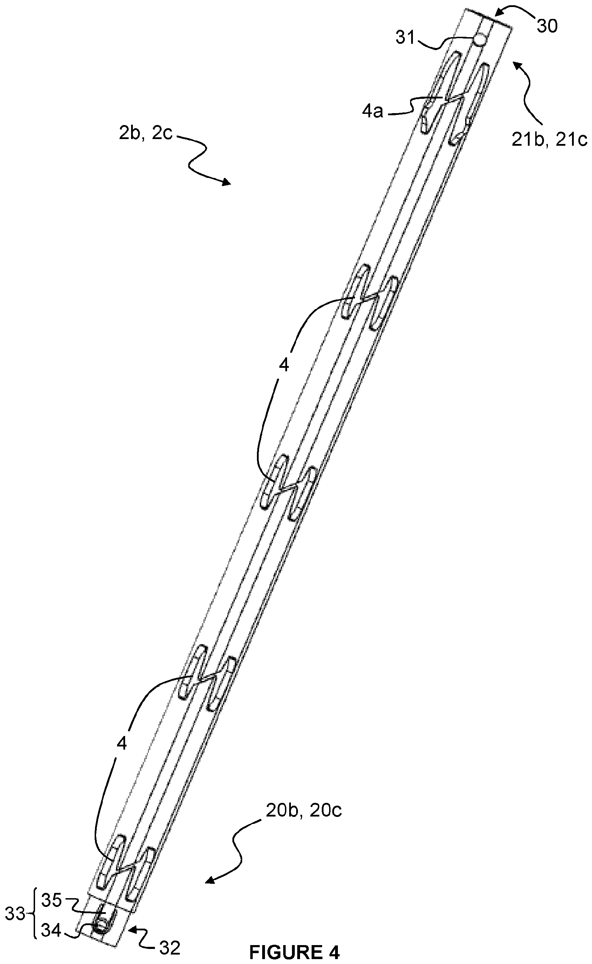

Referring now to Figure 4, the one of the other post segments 2b, 2c is shown in greater detail. Each of these other post segments 2b, 2c is the same, and both are generally similar to first, grounding engaging post segment 2a. As such, like features are denoted by like references and will not be described further.

The principal difference between the first post segment 2a and the other post segments 2b, 2c, is in the features present at their first ends 20b, 20c. The first end 20b, 20c is provided with a male part 32 of one of the button latch connectors 3, which is recessed with respect to the hollow tubular body of the post segment 2b, 2c. The male part 32 of any one of the other post segments 2b, 2c is configured to be inserted into second end 21a, 21b, 21c of any of the other post segments 2a, 2b, 2c.

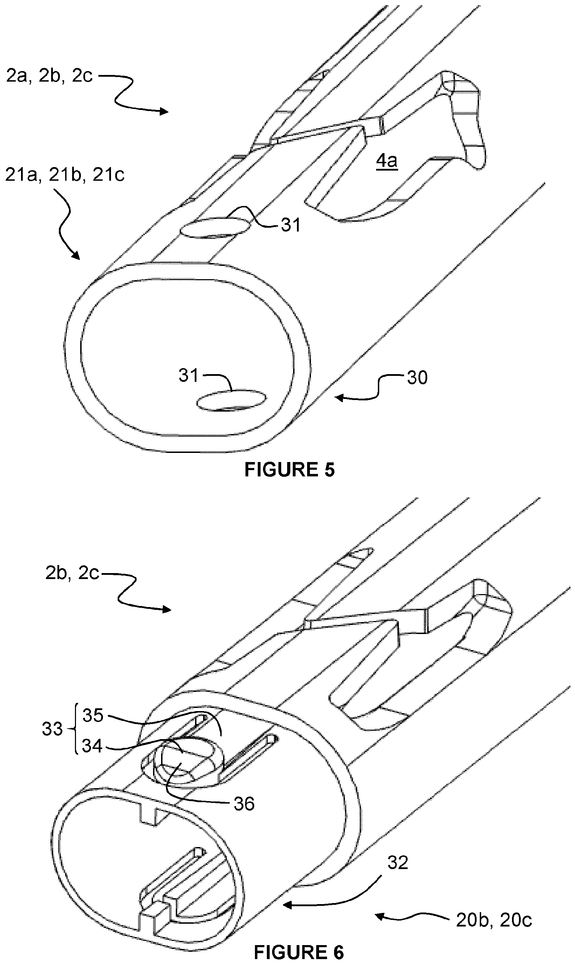

The front side and rear side of the male part 32 each include a button latch 33, having a projecting button 34 and biasing element 35 (shown in greater detail in Figure 6). The male part 32 has the same obround cross-sectional shape as the hollow tubular body of the post segment 2b, 2c. Each projecting button 34 is also provided with a tapered lead-in 36.

The button latch 3, namely the aperture 31 of the female part 30 of one of the post segments 2a, 2b and the button latch 33 of the male part 32 of the other post segment 2b, 2c together describe a snap-fit connection means.

In use, the male part 32 of one of the post segments 2b, 2c is inserted into the female part 30 of another of the post segments 2a, 2b to secure post segments 2a, 2b, 2c together. The obround cross-section of the male part 32 matches the obround cross-sectional shape of the female part 30, such that only two orientations are possible.

As the male part 32 is inserted into the female part 30, the tapered lead-ins 36 of the button projections 34 cause the button latches 33 to be depressed against the force of the biasing element 35. Once the male part 32 is fully inserted into the female part 30, the button projections 34 snap into the apertures 31 and are retained therein under the influence of biasing element 35, securing the post segments 2a, 2b, 2c together.

To decouple post segments 2a, 2b, 2c, a user depresses the button projections 34 and removes the male part 32 from the female part 30.

In a particularly preferred embodiment, all of the post segments 2a, 2b, 2c are made using a single mould. The mould blocks each describe part of three elongated cavities and three retractable, elongated cores each describing one of the post segments 2a, 2b, 2c. This reduces the size and cost of mould required to manufacture the post 1, since its length is reduced by 1/3. The post 1 according to the invention therefore reduces substantially the capital cost of the mould, enables smaller injection moulding machines to be used to mould the post 1 (due to the smaller mould) and reduces the cycle time (as explained above).

Thus, the invention provides a post design that reduces manufacturing costs through reduced capital and material costs, faster cycle times and reduced mould footprint. Indeed, the shorter posts, partially encapsulated spike (5) and reduction in weight also reduces shipping costs and complexity.

It will be appreciated by those skilled in the art that several variations to the aforementioned embodiments are envisaged without departing from the scope of the invention. For example, the shape, configuration and number of the receptacles 4, 4a may vary and/or the rear holes 7 may be omitted. The button projections 33 may be included on the female parts 30 and the apertures on the male parts 32 of the button latches 3. Also, whilst it is described that post segments 2a, 2b, 2c are connected via a snap-fit connection means, this need not be the case. Instead, one or more of the post segments may be provided with a thread, twist lock or screw-fit connection means.

It is also envisaged that the post 1 may be formed of more or less post segments 2a, 2b, 2c. The post 1 may also include a cap (not shown), which may include one of the parts 30, 32 of a button latch 3 to close off the end of the uppermost post segment 2c. Indeed, the mould (not shown) may include three (or more) cavities to mould three (or more) post segments simultaneously, with at least one of the cavities being selectively fed by a gating mechanism that is operable and/or controllable independently. The gating mechanism may comprise a turn gate. This arrangement would enable shorter or longer posts 1 to be manufactured using the same tool, by simply adding or removing the number of cavities that are filled during the moulding process.

It will also be appreciated by those skilled in the art that any number of combinations of the aforementioned features and/or those shown in the appended drawings provide clear advantages over the prior art and are therefore within the scope of the invention described herein.

## Claims

1. An electric fence post comprising a hollow body, a receptacle for receiving an electrical wire or tape and a spike at one end of the hollow body for securing the post into a substrate, wherein the receptacle is described by a pair of circumferentially spaced apertures extending through a wall of the hollow body and a slot joining the aperture pair through which a length of wire or tape may be inserted into the receptacle.

2. An electric fence post according to claim 1, comprising a hole extending through the wall on an opposite side of the body to the slot.

3. An electric fence post according to claim 1 or claim 2, wherein the receptacle is one of a plurality of receptacles spaced along the length of the hollow body.

4. An electric fence post according to claim 3 comprising a plurality of post segments each including part of the hollow body and at least one of the receptacles.

5. An electric fence post according to claim 4, wherein the post segments are connected together by a twist lock or snap fit connection.

6. An electric fence post according to any preceding claim, wherein the or each slot is skewed or extends diagonally between the or each aperture pair.

7. An electric fence post according to any preceding claim, wherein the spike comprises a partially encapsulated metal spike including one or more voids through which a portion of the metal spike is visible.

8. A method of moulding an electric fence post or post segment, the method comprising:
injecting a molten plastics material into an elongated cavity of a mould within which an elongated core is received and in which the elongated core is at least partially supported by a support projecting into the elongated cavity;
forming in the elongated cavity a hollow body incorporating a receptacle formed at least in part by the support, wherein the receptacle is described by a pair of circumferentially spaced apertures extending through a wall of the hollow body and a slot joining the aperture pair;
withdrawing the elongated core from the cavity; and
separating a pair of mould blocks that together describe the elongated cavity to remove the fence post or post segment from the mould.

9. A method according to claim 8 comprising
inserting a metal spike within the mould at one end of the elongated cavity before injecting the molten plastic into the elongated cavity;
retaining the metal spike within the elongated cavity with one or more spike supports as the molten plastics material is injected into the elongated cavity; and
forming a spike at one end of the hollow body by at least partially encapsulating the metal spike with the molten plastics material.

10. A method according to claim 8 or claim 9, wherein the hollow body is formed incorporating a hole formed at least in part by a further support projecting into the elongated cavity that also supports the elongated core, the hole extending through the wall of the hollow body on an opposite side of the body to the slot.

11. A method according to any one of claims 8 to 10 comprising:
injecting a molten plastics material into a plurality of elongated cavities of a mould within each of which an elongated core is received and in which each elongated core is at least partially supported by a respective support projecting into the elongated cavity;
forming in each elongated cavity a hollow body incorporating a receptacle formed at least in part by the support, wherein the receptacle is described by a pair of circumferentially spaced apertures extending through a wall of the hollow body and a slot joining the aperture pair;
withdrawing each elongated core from each cavity; and
separating the pair of mould blocks, which together describe the elongated cavities, to remove the fence posts or post segments.

12. A mould for manufacturing a hollow body of an electric fence post or post segment, the mould comprising an elongated cavity for describing an outer surface of the hollow body, a retractable, elongated core receivable within the elongated cavity for describing an inner surface of the hollow body and a support projecting into the elongated cavity which supports the elongated core and describes a receptacle of the hollow body when the mould is in a moulding configuration, wherein the receptacle is described by a pair of circumferentially spaced apertures extending through a wall of the hollow body and a slot joining the aperture pair.

13. A mould according to claim 12 comprising a plurality of elongated cavities each describing an outer surface of a respective hollow body of an electric fence post or post segment, a plurality of retractable, elongated cores each receivable within one of the elongated cavities for describing an inner surface of the hollow body and a plurality of supports each projecting into one of the elongated cavities, supporting the elongated core and describing a receptacle of the hollow body when the mould is in a moulding configuration, wherein each receptacle is described by a pair of circumferentially spaced apertures extending through a wall of the hollow body and a slot joining the aperture pair.

14. A mould according to claim 12 or claim 13 comprising a pair of separable mould blocks that together describe the elongated cavity or cavities, wherein one of the mould blocks includes the support(s) and the other of the mould blocks includes one or more further supports projecting into the elongated cavity for forming a hole opposite the or each receptacle.

15. An electric fence post segment for use in an electric fence post according to any one of claims 1 to 7, the post segment comprising a hollow body, one or more receptacles spaced along its length for receiving an electrical wire or tape and a connector at one end of the hollow body for connection with a connector of another post segment, the or each receptacle comprising a pair of circumferentially spaced apertures extending through a wall of the hollow body and a slot joining the aperture pair through which a length of wire or tape may be inserted into the receptacle.
